# EUROPEAN PATENT SPECIFICATION

(11) **EP 1 539 847 B1**
(45) Date of publication and mention of the grant of the patent: **27.06.2007**
(21) Application number: 03771490.4
(22) Date of filing: 14.07.2003
(51) Int. Cl.: C08F 283/02

(54) **PROCESS FOR THE PREPARATION OF A BLOCK COPOLYMER**
VERFAHREN ZUR HERSTELLUNG EINES BLOCKCOPOLYMERS
PROCEDE DE PREPARATION D'UN COPOLYMERE SEQUENCE

(30) Priority: 25.07.2002 EP 02102059
(43) Date of publication of application: 15.06.2005
(73) Proprietor: DSM IP Assets B.V., 6411 TE Heerlen (NL)
(72) Inventor: HEISE, Andreas, D-52538 Gangelt (DE); PALMANS, Ann, Rita, Alberta, NL-6132 CW Sittard (NL); THOMASSEN, Paul, Johannes, NL-6531 CE Nijmegen (NL)
(74) Representative: Jacobs, Monique S.N.
(86) International application number: PCT/NL2003/000515
(87) International publication number: WO 2004/011515

(56) References cited:
- US-A- 5 439 985
- US-A- 6 114 458
- URSULA MEYER, ANJA PALMANS, TON LOONTJENS, ANDERAS HEISE: "Enzymatic Ring Opening Polymerization and Atom transfer Radical Polymerization from a Bifunctional Initiator" MACROMOLECULES, vol. 35, 3 June 2002 (2002-06-03), pages 2873-2875, XP009004224 cited in the application
- SHIRO KOBAYASHI, HIROSHI UYAMA, SHUNSAKU KIMURA: "Enzymatic Polymerization" CHEMICAL REVIEW, vol. 101, 7 November 2001 (2001-11-07), pages 3793-3818, XP002228563 cited in the application
- CRAIG HAWKER, ANTON BOSMAN, EVA HARTH: "New Polymer Synthesis by Nitroxide Mediated Living Radical Polymerizations" CHEMICAL REVIEW, vol. 101, 25 October 2001 (2001-10-25), pages 3661-3688, XP002228564 cited in the application
- TROLLSAS M ET AL: "HIGHLY BRANCHED BLOCK COPOLYMERS: DESIGN, SYNTHESIS, AND MORPHOLOGY" MACROMOLECULES, AMERICAN CHEMICAL SOCIETY. EASTON, US, vol. 32, no. 15, 27 July 1999 (1999-07-27), pages 4917-4924, XP000845936 ISSN: 0024-9297 cited in the application
- KONDAVETI L ET AL: "Lipase-catalyzed solvent-free kinetic resolution of substituted racemic epsilon-caprolactones" TETRAHEDRON: ASYMMETRY, ELSEVIER SCIENCE PUBLISHERS, AMSTERDAM, NL, vol. 13, no. 2, 28 February 2002 (2002-02-28), pages 129-135, XP004345183 ISSN: 0957-4166

## Description

The invention relates to a process for the preparation of a multiblock copolymer, the process being carried out in the presence of a multifunctional initiator, said process comprising at least one enzymatically catalyzed homo- or copolymerization reaction chosen from the group comprising a ring opening polymerization (ROP) reaction and a polycondensation reaction, and at least one non-enzymatically catalyzed controlled homo- or copolymerization reaction.

The invention also relates to a chiral block copolymer and to a chiral block copolymer obtainable by the process according to the invention.

A process for the preparation of a block copolymer is disclosed in U. Meyer et al., Macromolecules (2002) 35, 2873. This process combines a lipase-catalyzed ring-opening polymerization of ε-caprolactone (ε-CL) with atom transfer radical polymerization (ATRP) of styrene in two consecutive steps, in the presence of a bifunctional initiator, yielding diblock copolymers of ε-CL and styrene.

A drawback of the known method is that CuBr is required as a catalyst for the ATRP reaction. Depending on its structure, such a catalyst may inhibit the enzymatically catalyzed homo- or copolymerization reaction in the known method. This is particularly the case when the lipase-catalyzed ring-opening polymerization and the ATRP reaction are carried out simultaneously in one pot or when the lipase-catalyzed ring-opening polymerization is carried out after the ATRP reaction in the same reaction medium. Furthermore, for many applications, for example in the biomedical and microelectronics field, the presence of such a metal catalyst in the product is undesired. Although removal of the metal catalyst is possible, it requires extra purification steps.

The aim of the present invention is therefore to provide a process for the preparation of a block copolymer in which at least one enzymatically catalyzed homo- or copolymerization reaction and at least one non-enzymatically catalyzed controlled homo- or copolymerization reaction are applied and in which the use of a metal catalyst is avoided.

This is achieved according to the invention by applying as the non-enzymatically catalyzed controlled homo- or copolymerization reaction a polymerization reaction chosen from the group comprising a free radical polymerization reaction, an ionic polymerization reaction, a polycondensation reaction, and a ring opening polymerization (ROP) reaction.

Surprisingly it has been found that said non-enzymatically catalyzed controlled polymerization reactions can be performed in the process according to the invention without inhibiting the enzyme used in the enzymatically catalyzed homo- or copolymerization reaction significantly. In fact, said non-enzymatically catalyzed polymerization reactions can be used before, during or after the enzymatically catalyzed polymerization reaction, in the same reaction medium, in the presence of a multifunctional initiator, resulting in the formation of a block copolymer.

In the framework of the present invention a non-enzymatically catalyzed controlled polymerization reaction is understood to be a polymerization reaction which is carried out in the presence of an initiator, i.e. a multifunctional initiator, and in which the initiator is incorporated into the growing polymer chain.

In the framework of the invention a non-enzymatically catalyzed free radical polymerization reaction is understood to be a polymerization reaction chosen from the group comprising Reversible Addition Fragmentation Chain Transfer Polymerization (RAFT), nitroxide mediated radical polymerization, and Iniferters polymerization. Such polymerization reactions are described in for example K. Matyjaszewski (Ed.), "Controlled Radical Polymerization", ICS Symposium Series 685, Oxford University Press (1998). Such polymerization reactions can be performed in the absence of a metal containing catalyst.

In the framework of the invention non-enzymatically catalyzed ionic polymerization reactions can be anionic or cationic polymerization reactions. Such polymerization reactions are described in for example WO-A-2000/063256 and WO-A-96/28487, respectively.

Non-enzymatically catalyzed polycondensation reactions, which can be used in the process according to the present invention, are described in for example G.C. Eastmond et al., Comprehensive Polymer Science, Vol. 5, Pergamon Press (1989).

Non-enzymatically catalyzed ROP reactions are decribed in for example E.F. Connor et al., J. Am. Chem. Soc., 124 (2002) 914.

From the non-enzymatically catalyzed controlled homo- or copolymerization reactions mentioned above, preferably a free radical polymerization reaction, more preferably a nitroxide mediated radical polymerization reaction is used in the process according to the invention. Nitroxide initiators are relatively easy to synthesize, thermally activated and applicable to a wide variety of monomers, resulting in polymers with predictable molecular weight and narrow polydispersity. Suitable examples of nitroxide initiators are mentioned in for example Hawker et al., Chem. Rev. (2001) 101, p. 3661, which is incorporated herein by reference.

Controlled free radical polymerization reactions, in particular nitroxide mediated radical polymerization reactions, generally involves the homo- or copolymerization of a monomer that can stabilize the propagating radicals during the polymerization reaction. Examples of such monomers include those mentioned in Hawker et al., Chem. Rev. (2001) 101, p. 3661, for example (meth)acrylates, styrenes, acrylonitriles, vinyl pyridines, vinyl formamide, (meth)acrylamides, and maleimides. Preferably (meth)acrylates or styrenes are used as the monomer in the non-enzymatically catalyzed controlled polymerization reaction.

The enzymatically catalyzed homo- or copolymerization reaction is preferably chosen from the group comprising a enzymatically catalyzed ring opening polymerization (ROP) reaction, and an enzymatically catalyzed polycondensation reaction. General descriptions of these types of polymerization are given in S. Kobayaski et al., Chem. Rev., 101 (2001), p. 3793-3818.

More preferably an enzymatically catalyzed ROP reaction is applied as the enzymatically catalyzed homo- or copolymerization reaction. Enzymatically catalyzed ROP reactions involve the ring opening polymerization of one or more kinds of cyclic compounds.

In the enzymatically catalyzed homo- or copolymerization reaction, preferably lactones (cyclic esters), lactames (cyclic amides), cyclic acid anhydrides, cyclic carbonates, and lactides are used as a monomer. Examples of lactones include β-propiolactone, β-butyrolactone, β-valerolactone, γ-butyrolactone, γ-valerolactone, γ-caprylolactone, ε-caprolactone, δ-stearolactone, ε-caprylolactone, and ε-palmitolactone; examples of lactams include β-propiolactam, γ-butyrolactam, γ-valerolactam, δ-valerolactam, ε-caprolactam, and hectolactam; examples of cyclic acid anhydrides include succinic anhydride, maleic anhydride, glutamic anhydride, and phtalic anhydride; examples of cyclic carbonates include ethylene carbonate, propylene carbonate, and trimethylene carbonate; and examples of lactides include dilactide, diglycollide and diglyceride.

In particular lactones are used, for example an optionally substituted ε-CL. Possible substituents to ε-CL include for example a halogen, an hydroxy group, an amine group, an amide group, a thiol group, an alkoxy group with for example 1 to 20 C atoms, a (hetero)aryl group with for example 1 to 20 C atoms and an aryloxy group with for example 1 to 20 C atoms. Examples of substituted ε-CL's are 2-bromo-ε-caprolactone, 4-methyl-ε-caprolactone, 4-ethyl-ε-caprolactone, 4-phenyl-ε-caprolactone, and 3,5-dimethyl-ε-caprolactone, as mentioned in for example M. Trollsas et al., Macromolecules, 32 (1999), p. 4917. When such substituted ε-CL's are used, the enzyme used in the enzymatically catalyzed homo- or copolymerization reaction may catalyze the polymerization of just one enantiomer of a racemic mixture of such chiral ε-CL's, thereby being capable of selectively polymerizing that enantiomer.

Starting from a racemic mixture of an substituted ε-CL monomer, application of such an enantioselective homo- or copolymerization reaction in the process according to the invention may result in the formation of chiral multiblock copolymers in which at least one of the blocks comprises at least one substituted ε-CL derivative.

The invention therefore also relates to a chiral block copolymer wherein at least one block comprises at least one substituted ε-CL derivative obtainable by the process according to the invention.

The enzymatically catalyzed polymerization reaction is generally catalyzed by a lipase. Lipases are triacylglycerol ester hydrolases classified as EC 3.1.1.3. Particularly suitable lipases are for example Candida antarctica Lipase B, optionally immobilized on for example acrylic resin (Novozyme 435), Pseudomonas cepacia (lipase PS-30), porcine pancreatic lipase (PPL), Candida cylindracea (lipase CCL), Candida Rugosa (lipase CR), Mucor Miehei (lipozyme), Pseudomonas aeruginosa (lipase PA), Pseudomonas fluorescence (lipase PF), and Aspergillus niger (lipase A). Proteases may also be used as the enzyme.

The process according to the invention, comprising at least one enzymatically catalyzed homo- or copolymerization reaction and at least one non-enzymatically catalyzed controlled homo- or copolymerization reaction, may be performed in bulk as well as in the presence of one or more solvents.

For example, when a nitroxide mediated radical polymerization reaction is applied in combination with an enzymatically catalyzed ROP reaction, this reaction may suitably be performed in bulk as well as in the presence of one or more organic solvents. Additional cosolvents or surfactants, such as glycols or ammonium salts of fatty acids, may be present. If organic solvents are used, suitable solvents or mixtures are typically aliphatic hydrocarbons, for example hexane, heptane, octane, or isooctane; aromatic hydrocarbons, for example benzene, toluene, or xylene; halogenated hydrocarbons, for example 6hiorobenzene, 1,1,2-trichlorotrifluoroethane, chloroform or o-dichlorobenzene; and ethers, for example diethyl ether, dipropyl ether, dibutyl ether, diisopropyl ether, or tetrahydrofuran; or mixtures thereof.

In the process according to the invention, at least one enzymatically catalyzed polymerization reaction and at least one non-enzymatically catalyzed controlled polymerization reaction are preferably both carried out in bulk. As such, the need for removal of solvent after the reaction is avoided.

Said combination of an enzymatically catalyzed polymerization reaction and a non-enzymatically catalyzed polymerization reaction may be carried out in any order, in a one-pot or a multi-pot reaction set-up, simultaneously or one after the other. Preferably said polymerization reactions are performed in one pot. Carrying out the polymerization reactions in one pot avoids intermediate work-up steps and limits the amount of equipment needed. More preferably said polymerization reactions are carried out simultaneously to minimize the reaction time and maximize the output.

The process according to the invention is generally performed at a reaction temperature between 50 and 200 °C, preferably between 70 and 140 °C, more preferably between 90 and 110 °C. The pressure at which the process according to the invention is carried out is not particularly critical and depends on for example the monomers and solvent used and the reaction temperature. The reaction time is generally between 0.5 h and 7 days, preferably between 4 and 72 h. The reaction conditions may vary between the different polymerization reactions, i.e. the enzymatically catalyzed polymerization reaction and a non-enzymatically catalyzed polymerization reaction, and also within one polymerization reaction.

The process according to the invention comprising an enzymatically catalyzed polymerization reaction and a non-enzymatically catalyzed polymerization reaction may be carried out in the presence of a multifunctional initiator comprising at least one functional group that initiates an enzymatically catalyzed ROP reaction or an enzymatically catalyzed polycondensation reaction and at least one functional group that initiates a non-enzymatically catalyzed free radical polymerization reaction, a non-enzymatically catalyzed anionic polymerization reaction, or a non-enzymatically catalyzed ROP reaction.

Preferably the functional group that initiates an enzymatically catalyzed homo- or copolymerization reaction chosen from the group comprising a ring opening polymerization (ROP) reaction and a polycondensation reaction is an hydroxy, amino or carboxylic acid group. More preferably a hydroxy group is applied because of its easy integration into the polymer chain.

The functional group that initiates a non-enzymatically catalyzed free radical polymerization reaction, a non-enzymatically catalyzed anionic polymerization reaction, or a non-enzymatically catalyzed ROP reaction is generally group that easily converts to or represents an active initiating species such as a radical, an ion or any other reactive group, which can form a covalent bond with the polymer chain. Suitable functional groups include for example halogen, nitroxide, thiol, and alcohol groups.

The invention also relates to a chiral block copolymer. The term "block copolymer" is generally known in the art and is understood to be a copolymer comprising at least two types of monomers which are arranged in a block structure. In the chiral block copolymer according to the invention at least one block comprises at least one substituted ε-CL derivative. Preferably the substituted ε-CL derivative is chosen from the group comprising 2-bromo-ε-caprolactone, 4-methyl-ε-caprolactone, 4-ethyl-ε-caprolactone, 4-phenyl-ε-caprolactone, and 3,5-dimethyl-ε-caprolactone. The chiral block copolymer comprises at least one other block, which may also be chiral, comprising a monomer selected from the group comprising (meth)acrylates, styrenes, acrylonitriles, vinyl pyridines, vinyl formamide, (meth)acrylamides, and maleimides. Preferably the chiral block copolymer according to the invention comprises at least one other block comprising a (meth)acrylate or a styrene. Suitable examples of such block copolymers are block copolymers comprising at least 2-bromo-ε-caprolactone and a (meth)acrylate, 2-bromo-ε-caprolactone and styrene, 4-methyl-ε-caprolactone and a (meth)acrylate, 4-methyl-ε-caprolactone and styrene, 4-ethyl-ε-caprolactone and a (meth)acrylate, 4-ethyl-ε-caprolactone and styrene, 4-phenyl-ε-caprolactone and a (meth)acrylate, 4-phenyl-ε-caprolactone and styrene, 3,5-dimethyl-ε-caprolactone and a (meth)acrylate, and 3,5-dimethyl-ε-caprolactone and styrene.

The chiral block copolymer according to the invention preferably has a weight average molecular weight (M_{w}), measured by Gas Permeation Chromatography (GPC), in the range 500-1000,000 g/mol, more preferably in the range 1000-100,000 g/mol, most preferably in the range 3000-50,000 g/mol, and a molecular weight distribution, measured as the ratio between the weight average molecular weight and the number average molecular weight (M_{w}/Mₙ) in the range 1.0-2.5, preferably in the range 1.1-1.8.

The invention is elucidated with reference to the following Examples without being limited thereto.

### Examples

### Starting materials

Novozym 435 was obtained from NOVO NORDISK. Styrene and ε-CL were distilled before the first reaction. All other chemicals are commercially available and were used without further purification, unless stated otherwise.

### Analysis

NMR experiments were carried out on a Bruker 300 DPX (300 MHz for ¹H-NMR) and on a Bruker Avance 300 (300 MHz for ¹H-NMR). Abbreviations used are s = singlet, d = doublet, dd = doublet of doublets, t = triplet, dt = doublet of triplets, q = quartet, dq = doublet of quartets, se = sextet, o = octet, m = multiplet and br = broad.

### Isolation of Polymers

Precipitation of polymers was carried by dropping a concentrated CHCl₃ solution of the polymer in ice-cold methanol and subsequent filtration of the suspension, after which the polymer was dried *in vacuo.* The amount of enzyme used was usually approximately one tenth the weight of ε-CL monomers plus initiator.

### Example I. Synthesis of the bifunctional initiator [4-(-{[tert-butyl(2-methyl-1-phenylpropyl)amino]oxy}ethyl)phenyl]methanol (5)

Steps 1-3 were carried out according to literature methods, see for example J. Dao et al., J. Pol. Sci. A, Polym. Chem., 30 (1998) 2161-2167.

### Step 1. N-tert-butyl-α-isopropylnitrone (1)

In 97 ml of water were dissolved 5.0 g (48.5 mmol) of 2-methyl-2-nitropropane, 4.4 ml (48.5 mmol) of isobutyraldehyde and 2.9 g (53.3 mmol) of ammonium chloride. The resulting solution was cooled to 0°C. To this solution was added 49 ml of diethyl ether (Et₂O)and 12.7 g (194 mmol) of zinc powder in portions, after which the mixture was stirred for 20 hours. After this the solid was filtered off and washed with cold methanol. The filtrate was extracted three times with 20 ml of CH₂Cl₂, after which the organic layers were combined and washed with 20 ml of brine and dried with Na₂SO₄. Evaporation of the solvent yielded a pure light green low melting product. Yield: 5.2 g (74%). TLC = 10:1 ethyl acetate/methanol (EtOAc/MeOH). ¹H-NMR (300.13 MHz, CDCl₃, 298 K): δ = 6.52 (d, 1H, ³*J*(H,H) =6.9 Hz, vinylic H), 3.10 (o, 1H, ³*J*(H,H) = 6.9 Hz, allylic H), 1.38 (d, 9H, *t*-butyl H's), 0.95 (d, 6H, ³*J*(H,H) = 6.7 Hz, *i*-propyl H's).

### Step 2. 2,2,5,-trimethyl-4-phenyl-3-azahexane-3-nitroxide(2)

To 50 ml tetrahydrofuran (THF) was added 3.38 g (23.7 mmol) of (1), after which the resulting solution was brought under an argon atmosphere and cooled to 0°C. Through a syringe 62 ml (62 mmol) of 1 M phenylmagnesium bromide in ether was added over 5 minutes. After stirring for 17 hours, 10 ml of an ammonium chloride saturated aqueous solution was added and 50 ml water. The mixture was extracted three times with 25 ml Et₂O and after this the combined organic layers were dried with MgSO₄. After evaporation of most of the solvent the solution was added to a mixture of 100 ml of MeOH, 8 ml of aqueous ammonium hydroxide solution and 0.24 g (1.18 mmol) of copper acetate, Cu(OAc)₂. Air was bubbled through this mixture, while it was stirred, until the colour went green. After this the solution was concentrated and dissolved in a two-phase system of 100 ml of CHCl₃ and 100 ml of water. After separation of the layers the water layer was extracted three times with 20 ml of CHCl₃ and the combined organic layers were washed with 40 ml of an aqueous solution of saturated sodium bicarbonate, dried with MgSO₄ and concentrated. Isolation of the product was by column chromatography eluting with hexane/EtOAc 20:1, after first eluting with hexane for a better separation. The desired product was obtained as a light orange oil. Yield: 3.74 g (72%). TLC = 16:1 hexane/EtOAc.

### Step 3. 1-(1-{[tert-butyl(2-methyl-1-phenylpropyl)amino]oxy}ethyl)-4-(chloromethyl)benzene (3)

To a mixture of 125 ml of toluene and 125 ml of ethanol, which had been bubbled with air for an hour, was added 2.39 g (10.8 mmol) of (2), 2.62 g (17.2 mmol) of 4-vinylbenzylchloride, 2.0 g (2.86 mmol) of (N,N'-bis{3,5-di-*tert-*butylsalicylidene}-1,2-cyclohexanediaminato)manganese(III)chloride ({R,R}-Jacobsen catalyst) and 1.31 g (34.2 mmol) of NaBH₄ in the mentioned order. Air was bubbled through the solution for 13 hours while stirring was continued. The mixture was then filtered over a layer of silica over sand to remove solids. The silica was subsequently washed with CH₂Cl₂. The organic solution was concentrated and the desired product was obtained by column chromatography eluting with 1:18 CH₂Cl₂/hexane gradually increasing the amount of CH₂Cl₂. The product was obtained as a colourless oil. Yield: 2.43 g (60%). TLC =18:1 hexane/CH₂Cl₂. ¹H-NMR (300.13 MHz, CDCl₃, 298 K, both diastereomers): δ = 7.5-7.1 (m, 18H, aromatic H's), 4.87 (dq, 1H, ³*J*(H,H) = 6.7 Hz, CHO), 4.55 (s, 2H, CH₂-Cl), 4.52 (s, 2H, CH₂-Cl), 3.39 (d, 1H, ³*J*(H,H) = 10.5 Hz, CH-N), 3.28 (d, 1H, ³*J*(H,H) = 10.7 Hz, CH-N), 2.31 (2m, 2H, *i*-propyl H), 1.59 (d, 3H, ³*J*(H,H) = 6.5 Hz, CH₃-C-O), 1.51 (d, 3H, ³*J*(H,H) = 6.5 Hz), 1.27 (d, 3H, ³*J*(H,H) = 6.3 Hz, *i-*propyl CH₃), 1.01 (s, 9H, *t*-butyl CH₃'s), 0.89 (d, 3H, ³*J*(H,H) = 6.3 Hz, *i*-propyl CH₃), 0.75 (s, 9H, *t*-butyl CH₃'s), 0.51 (d, 3H, ³*J*(H,H) = 6.5 Hz, *i*-propyl CH₃), 0.20 (d, 3H, ³*J*(H,H) = 6.8 Hz, *i*-propyl CH₃).

### Step 4. 4-(1-{[ted-butyl(2-methyl-1-phenylpropyl)amino]oxy}ethyl) benzyl acetate (4)

A solution of 2.56 g (6.85 mmol) of (3), 2.07 g (21.12 mmol) of potassium acetate (KAc), 10 mg (0.06 mmol) of KI and 60 mg of 18-crown-6 ether in 25 ml of DMSO was stirred at 60°C for 40 hours. After this the solution was poured in to 200 ml of water and the obtained solution was extracted three times with 50 ml of CH₂Cl₂, after which the combined organic layers were washed with 50 ml of water and 50 ml of brine and dried with MgSO₄. The product was obtained as a yellowish liquid after concentration of the solution and column chromatography, eluting with hexane/CH₂Cl₂ 1:1. Yield: 1.57 g (58%). TLC = 1:6 hexane/CH₂C)₂. ¹H-NMR (300.13 MHz, CDCl₃, 298 K, both diastereomers): δ = 7.5-7.1 (m, 18H, aromatic H's), 5.10 (s, 2H, CH₂-O), 5.06 (s, 2H, CH₂-O), 4.88 (dq, 2H, ³*J*(H,H = 6.5 Hz, CH-O), 3.40 (d, 1H, ³*J*(H,H) = 10.7 Hz, CH-N), 3.29 (d, 1H, ³*J*(H,H) = 10.7 Hz, CH-N), 2.33 (2m, 2H, *i-*propyl H), 2.08 (s, 3H, CH₃-COO), 2.08 (s, 3H, CH₃-COO), 1.59 (d, 3H, ³*J*(H,H) = 6.7 Hz, *i*-propyl CH₃), 1.52 (d, 3H, ³*J*(H,H) = 6.5 Hz, *i*-propyl CH₃), 1.27 (d, 3H, ³*J*(H,H) = 6.3 Hz, *i*-propyl CH₃), 1.02 (s, 9H, *t*-butyl H's), 0.91 (d, 3H, ³*J*(H,H) = 6.3 Hz, *i*-propyl CH₃), 0.76 (s, 9H, *t*-butyl H's), 0.52 (d, 3H, ³*J*(H,H) = 6.5 Hz, *i*-propyl CH₃), 0.21 (d, 3H, ³*J*(H,H) = 6.7 Hz, *i*-propyl CH₃).

### Step 5. [4-(-{[tert-butyl(2-methyl-1-phenylpropyl)amino]oxy}ethyl)-phenyl]methanol (5)

In 20 ml of THF was dissolved 3.8 g (9.56 mmol) of (4), and to this solution was added 50 ml of a 2 M aqueous KOH solution (5.61 g of KOH), after which 2 drops 15-crown-5 ether were added and the 2-phase system was stirred at 85°C for 18 hours (THF refluxes). When the reaction was complete 20 ml of Et₂O was added and the layers were separated, after which the water layer was extracted three times with 10 ml of Et₂O and the combined organic layers were extracted with 10 ml of water. After drying of the organic layer with Na₂SO₄ the desired product was obtained as colourless oil after concentration of the solution and column chromatography, eluting with hexane/CH₂Cl₂ 1:2. TLC = 1:6 hexane/CH₂Cl₂.

¹H-NMR (300.13 MHz, CDCl₃, 298 K, both diastereomers): δ = 7.5-7.1 (m, 18H, aromatic H's), 4.89 (dq, 2H, ³*J*(H,H) = 6.5 Hz, CH-O), 4.65 (d, 2H, ³*J*(H,H) = 2.5 Hz, CH₂-O), 4.61 (d, 2H, ³*J*(H,H) = 3.2 Hz, CH₂-O), 3.37 (d, 1H, ³*J*(H,H) = 10.7 Hz, CH-N), 3.27 (d, 1H, ³*J*(H,H) = 10.9 Hz, CH-N), 2.29 (2m, 2H, *i*-propyl H), 1.69 (s, br, 1H, OH), 1.68 (s, br, 1H, OH), 1.57 (d, 3H, ³*J*(H,H) = 6.5 Hz, CH₃-C-O), 1.49 (d, 3H, ³*J*(H,H) = 6.5 Hz), 1.26 (d, 3H, ³*J*(H,H) = 6.5 Hz, *i*-propyl CH₃), 1.00 (s, 9H, *t*-butyl CH₃'s), 0.90 (d, 3H, ³*J*(H,H) = 6.3 Hz, *i*-propyl CH₃), 0.73 (s, 9H, *t*-butyl H's), 0.49 (d, 3H, ³*J*(H,H) = 6.5 Hz, *i*-propyl CH₃), 0.19 (d, 3H, ³*J*(H,H) = 6.5 Hz, *i*-propyl CH₃).

### Example II. Comparison of initiators for ROP of ε-CL

It was tested whether ROP of ε-CL to polycaprolactam (PCL), catalysed by Novozym 435, could take place at the multifunctional initiator (5) at an efficient speed, by comparing the polymerisation rate of ε-CL by Novozym 435 at (5) with those at benzylalcohol and [4-(*tert*-butyl)phenyl]methanol. ROP reactions were carried out using 2.0 M of ε-CL and 0.2 M of (5) in deuterated toluene inside an NMR tube at 60°C. Conversion, initiator efficiency and degree of polymerisation were followed using ¹H-NMR. From the obtained conversion plots the rate values (k's) of the reactions were obtained by plotting -In([ε-CL]/[ε-CL]₀) vs. time and measuring the slope of the approximately straight line at the beginning of the reaction. The reaction rates (k), initiator efficiencies (IE) and degrees of polymerisation (DP) are listed in Table 1.

**Table 1. Comparison of ROP of ε-CL by Novozym 435 at 3 different initiators at 60°C**

| Initiator | k (*10⁻³ s⁻¹) | IE (%) | DP |
|---|---|---|---|
| (5) | 23.2 | 81 | 13 |
| Benzylalcohol | 23.5 | 89 | 11 |
| [4-(*tert*-butyl)phenyl]methanol | 13.9 | 73 | 6.5 |

| | | | |
|---|---|---|---|
| The results show that (5) is capable of initiating ROP. | | | |

### Example III. Two-pot synthesis of a PCL-PS co-polymer.

To 121.3 mg of Novozym 435 a mixture of 70.7 mg (0.199 mmol) of (5) and 1.108 ml (10.0 mmol) of ε-CL was added. This mixture was stirred at 60 °C for 3.5 hours during which the mixture became very viscous. The reaction was stopped by adding CHCl₃, followed by filtration to remove the enzyme. Caprolactone polymer (PCL) was obtained by precipitation.

In 2.00 ml (17.46 mmol) of styrene was then dissolved 328 mg of-PCL. The resulting solution was made oxygen-free using the freeze-pump-thaw method and subsequently stirred for 18 hours at 95°C, during which the mixture solidified. The obtained gel was dissolved in chloroform, filtered and precipitated to give PS-PCL copolymers. PCL / PS = 0.13/1. GPC: M_{w} = 130 kg/mol; M_{w}/Mₙ = 2.3. DSC: T_{melt;PCL} = 57.4°C; ΔH = 0.789 Jg⁻¹; Tg_{styrene} = 96.2°C; ΔCp = 0.225 Jg⁻¹(°C⁻¹).

### Example IV. One-pot two-step synthesis of a PCL-PS copolymer

To a mixture of 1.158 ml (10.4 mmol) of ε-CL and 1.611 ml (14.1 mmol) of styrene was added 50.4 mg (0.142 mmol) of (5) and 173.4 mg of Novozym 435. This mixture was made oxygen-free using the freeze-pump-thaw method and stirred for 285 minutes at 60 °C, after which the temperature was raised to 95 °C for 43.5 hours. After this the mixture had become a thick gel. Copolymers were obtained by dissolving the gel in chloroform, filtration of the enzyme and precipitation. PCL / PS = 1.08 / 1. GPC: M_{w} = 20 kg/mol; M_{w}/Mₙ = 1.4.
DSC: Tₘₑₗₜ: PCL = 58.1 °C; ΔH = 4.991 Jg-1.

### Example V. One-pot two-step synthesis of a PCL-PS copolymer

To a mixture of 2.316 ml (20.9 mmol) of ε-CL and 1.611 ml (14.1 mmol) of styrene was added 33.5 mg (0.0942 mmol) of (5) and 243.2 mg of Novozym 435. This mixture was made oxygen-free using the freeze-pump-thaw method and stirred for 3 hours at 60 °C, after which the temperature was raised to 95 °C and stirring was continued for another 18 hours. After this the mixture had become a thick gel. Copolymers were obtained by dissolving the gel in chloroform and filtration of the enzyme. PCL / PS = 2.45 / 1. GPC: M_{w} = 30 kg/mol; M_{w}/Mₙ = 1.6.

### Example VI. One-pot one-step synthesis of a PCL-PS co-polymer

To a mixture of 1.158 ml (10.4 mmol) of ε-CL and 1.611 ml (14.1 mmol) of styrene was added 49.8 mg (0.140 mmol) of nitroxide initiator and 165.4 mg of Novazym 435. This mixture was made oxygen-free using the freeze-pump-thaw method and stirred for 18 hours at 95 °C. After this the mixture had become a thick gel. Co-polymers were obtained by dissolving the gel in chloroform, filtration of the enzyme and precipitation. PCL / PS = 1.02/1. GPC: M_{w} = 19 kg/mol; M_{w}/Mₙ = 1.5. DSC:
T_{melt;PCL} = 58.1 °C; ΔH = 30.392 Jg⁻¹; Tg_{styrene} = 96.9 °C; ΔCp = 0.039 Jg⁻¹ (°C⁻¹).

## Claims

1. Process for the preparation of a block copolymer, the process being carried out in the presence of a multifunctional initiator and comprising at least one enzymatically catalyzed homo- or copolymerization reaction and at least one non-enzymatically catalyzed controlled homo- or copolymerization reaction, **characterized in that** the use of a metal catalyst is avoided, and **in that** the non-enzymatically catalyzed controlled homo- or copolymerization reaction is chosen from the group comprising a free radical polymerization reaction, an ionic polymerization reaction, a polycondensation reaction, and a ring opening polymerization (ROP) reaction.

2. Process according to claim 1, wherein the non-enzymatically catalyzed controlled polymerization reaction is a nitroxide mediated radical polymerization reaction.

3. Process according to claim 1 or claim 2, wherein the non-enzymatically catalyzed controlled polymerization reaction involves the polymerization of a monomer selected from the group comprising (meth)acrylates, styrenes, acrylonitriles, vinyl pyridines, vinyl formamide, (meth)acrylamides, and maleimides.

4. Process according to any one of claims 1-3, wherein the enzymatically catalyzed polymerization reaction is a ROP reaction.

5. Process according to claim 4, wherein optionally substituted ε-caprolactone is used as a monomer.

6. Process according to claim 5, wherein the optionally substituted ε-caprolactone is a substituted ε-caprolactone.

7. Process according to any one of claims 1-6, wherein the enzymatically catalyzed polymerization reaction is catalysed by a lipase of class EC 3.1.1.3.

8. Process according to claim 7, wherein the lipase is chosen from the group comprising Candida antarctica Lipase B, Pseudomonas cepacia (lipase PS-30), porcine pancreatic lipase (PPL), Candida cylindracea (lipase CCL), Candida Rugosa (lipase CR), Mucor Miehei (lipozyme), Pseudomonas aeruginosa (lipase PA), Pseudomonas fluorescence (lipase PF), and Aspergillus niger (lipase A).

9. Process according to any one of claims 1-8, wherein at least one enzymatically catalyzed polymerization reaction and at least one non-enzymatically catalyzed controlled polymerization reaction are carried out in bulk.

10. Process according to any one of claims 1-9, wherein at least one enzymatically catalyzed polymerization reaction and at least one non-enzymatically catalyzed controlled polymerization reaction are carried out in one pot.

11. Process according to claim 10, wherein at least one enzymatically catalyzed polymerization reaction and at least one non-enzymatically catalyzed controlled polymerization reaction are carried out simultaneously.

12. Chiral block copolymer according to claim 12 or claim 13, obtainable by a process according to any one of claims 1-11.

## Patentansprüche

1. Verfahren zur Herstellung eines Blockcopolymers, das in Gegenwart eines multifunktionellen Initiators durchgeführt wird und mindestens eine enzymatisch katalysierte Homo- oder Copolymerisationsreaktion und mindestens eine nichtenzymatisch katalysierte kontrollierte Homo- oder Copolymerisationsreaktion umfaßt, **dadurch gekennzeichnet, daß** man auf die Verwendung eines Metallkatalysators verzichtet und die nichtenzymatisch katalysierte kontrollierte Homo- oder Copolymerisationsreaktion aus der Gruppe bestehend aus einer radikalischen Polymerisationsreaktion, einer ionischen Polymerisationsreaktion, einer Polykondensationsreaktion und einer ringöffnenden Polymerisationsreaktion (ROP-Reaktion) auswählt.

2. Verfahren nach Anspruch 1, bei dem es sich bei der nichtenzymatisch katalysierten kontrollierten Polymerisationsreaktion um eine Nitroxidvermittelte radikalische Polymerisationsreaktion handelt.

3. Verfahren nach Anspruch 1 oder 2, bei dem man bei der nichtenzymatisch katalysierten kontrollierten Polymerisationsreaktion ein Monomer aus der Gruppe bestehend aus (Meth)acrylaten, Styrolen, Acrylnitrilen, Vinylpyridinen, Vinylformamid, (Meth)-acrylamiden und Maleinimiden polymerisiert.

4. Verfahren nach einem der Ansprüche 1-3, bei dem es sich bei der enzymatisch katalysierten Polymerisationsreaktion um eine ROP-Reaktion handelt.

5. Verfahren nach Anspruch 4, bei dem man gegebenenfalls substituiertes ε-Caprolacton als Monomer verwendet.

6. Verfahren nach Anspruch 5, bei dem es sich bei dem gegebenenfalls substituierten ε-Caprolacton um ein substituiertes ε-Caprolacton handelt.

7. Verfahren nach einem der Ansprüche 1-6, bei dem man die enzymatisch katalysierte Polymerisationsreaktion durch eine Lipase der Klasse EC 3.1.1.3 katalysiert.

8. Verfahren nach Anspruch 7, bei dem man die Lipase aus der Gruppe bestehend aus Candida antarctica Lipase B, Pseudomonas cepacia (Lipase PS-30), Schweinepankreaslipase (PPL), Candida cylindracea (Lipase CCL), Candida rugosa (Lipase CR), Mucor miehei (Lipozyme), Pseudomonas aeruginosa (Lipase PA), Pseudomonas fluorescens (Lipase PF) und Aspergillus niger (Lipase A) auswählt.

9. Verfahren nach einem der Ansprüche 1-8, bei dem man mindestens eine enzymatisch katalysierte Polymerisationsreaktion und mindestens eine nichtenzymatisch katalysierte kontrollierte Polymerisationsreaktion in Substanz durchführt.

10. Verfahren nach einem der Ansprüche 1-9, bei dem man mindestens eine enzymatisch katalysierte Polymerisationsreaktion und mindestens eine nichtenzymatisch katalysierte kontrollierte Polymerisationsreaktion in einem Topf durchführt.

11. Verfahren nach Anspruch 10, bei dem man mindestens eine enzymatisch katalysierte Polymerisationsreaktion und mindestens eine nichtenzymatisch katalysierte kontrollierte Polymerisationsreaktion gleichzeitig durchführt.

12. Chirales Blockcopolymer, erhältlich nach einem Verfahren gemäß einem der Ansprüche 1-11.

## Revendications

1. Procédé de préparation d'un copolymère séquencé, le procédé étant réalisé en présence d'un amorceur multifonctionnel et comprenant au moins une réaction d'homo- ou de copolymérisation à catalyse enzymatique et au moins une réaction d'homo- ou de copolymérisation régulée à catalyse non-enzymatique, **caractérisé en ce que** l'utilisation d'un catalyseur métallique est évitée, et **en ce que** la réaction d'homo- ou de copolymérisation régulée à catalyse non-enzymatique est choisie parmi le groupe comprenant une réaction de polymérisation radicalaire, une réaction de polymérisation ionique, une réaction de polycondensation et une réaction de polymérisation avec ouverture de cycle (POC).

2. Procédé selon la revendication 1, dans lequel la réaction de polymérisation régulée à catalyse non-enzymatique est une réaction de polymérisation radicalaire à médiation par nitroxyde.

3. Procédé selon la revendication 1 ou la revendication 2, dans lequel la réaction de polymérisation régulée à catalyse non-enzymatique met en jeu la polymérisation d'un monomère choisi parmi le groupe comprenant des (méth)acrylates, des styrènes, des acrylonitriles, des vinylpiridines, le vinylformamide, des (méth)acrylamides et des maléimides.

4. Procédé selon l'une quelconque des revendications 1 à 3, dans lequel la réaction de polymérisation à catalyse enzymatique est une réaction de POC.

5. Procédé selon la revendication 4, dans lequel une ε-caprolactone éventuellement substituée est utilisée en tant que monomère.

6. Procédé selon la revendication 5, dans lequel la ε-caprolactone éventuellement substituée est une ε-caprolactone substituée.

7. Procédé selon l'une quelconque des revendications 1 à 6, dans lequel la réaction de polymérisation à catalyse enzymatique est catalysée par une lipase de la classe EC 3.1.1.3.

8. Procédé selon la revendication 7, dans lequel la lipase est choisie parmi le groupe comprenant la Candida antarctica (lipase B), Pseudomonas cepacia (lipase PS-30), lipase pancréatique porcine (PPL), Candida cylindracea (lipase CCL), Candida rugosa (lipase CR), Mucor miehei (lipozyme), Pseudomonas aeruginosa (lipase PA), Pseudomonas fluorescence (lipase PF) et Aspergillus niger (lipase A).

9. Procédé selon l'une quelconque des revendications 1 à 8, dans lequel au moins une réaction de polymérisation à catalyse enzymatique et au moins une réaction de polymérisation régulée à catalyse non-enzymatique sont réalisées en masse.

10. Procédé selon l'une quelconque des revendications 1 à 9, dans lequel au moins une réaction de polymérisation à catalyse enzymatique et au moins une réaction de polymérisation régulée à catalyse non-enzymatique sont réalisées dans un seul récipient.

11. Procédé selon la revendication 10, dans lequel une réaction de polymérisation à catalyse enzymatique et au moins une réaction de polymérisation régulée à catalyse non-enzymatique sont réalisées simultanément.

12. Copolymère séquencé chiral, pouvant être obtenu par un procédé selon l'une quelconque des revendications 1 à 11.
